# EUROPÄISCHE PATENTSCHRIFT

(11) **EP 1 240 626 B1**
(45) Veröffentlichungstag und Bekanntmachung des Hinweises auf die Patenterteilung: **08.02.2006**
(21) Anmeldenummer: 00981302.3
(22) Anmeldetag: 24.11.2000
(51) Int. Cl.: G07F 7/08, G07F 7/10, G07F 9/00, H04Q 7/38

(54) **VORRICHTUNG UND VERFAHREN ZUR AUSGABE EINER WARE BZW. FREIGABE EINER DIENSTLEISTUNG SOWIE GEEIGNETES SYSTEM HIERFÜR**
DEVICE AND METHOD FOR DISPENSING A GOOD OR OFFERING A SERVICE AND A SUITABLE SYSTEM HEREFOR
DISPOSITIF ET PROCEDE PERMETTANT DE FOURNIR UN PRODUIT OU DE LANCER UN SERVICE ET SYSTEME ADAPTE A CETTE FIN

(30) Priorität: 14.12.1999 DE 19960254
(43) Veröffentlichungstag der Anmeldung: 18.09.2002
(73) Patentinhaber: Viag Interkom GmbH & Co., 80687 München (DE)
(72) Erfinder: PFAFF, Claus, Viag Interkom GmbH & Co., 80687 München (DE)
(74) Vertreter: Herrmann, Uwe
(86) Internationale Anmeldenummer: PCT/EP2000/011739
(87) Internationale Veröffentlichungsnummer: WO 2001/045055

(56) Entgegenhaltungen:
- WO-A-00/38443
- WO-A-99/10844
- WO-A-99/22346
- WO-A-99/27465
- JP-A- 9 212 730
- JP-A- 10 326 376
- US-A- 4 951 308
- US-A- 5 668 875

## Beschreibung

Die vorliegende Erfindung betrifft eine Vorrichtung zur Ausgabe einer Ware bzw. Freigabe einer Dienstleistung sowie ein geeignetes System hierfür.

Weltweit werden in großen Zahlen beispielsweise Warenautomaten in der Öffentlichkeit aufgestellt, die Kunden bzw. Benutzern es erlauben, nach einem Münzeinwurf Getränke, Süßwaren und Ähnliches zu erhalten. Demgegenüber erfolgt im Gastronomiebereich in der Regel die Abrechnung der Dienstleistung bar, wohingegen häufig auch Kreditkarten eingesetzt werden.

Im Bereich der Warenautomaten kam es in ihrer Vergangenheit bereits zu einigen Versuchen der Zusammenarbeit zwischen Telekommunikations- bzw. Mobilfunkbetreibem und Automatenbetreibem. Die Ausgabe einer Ware erfolgt hierbei durch Anruf einer bestimmten vorzugsweise auf dem Warenautomaten deutlich erkennbaren Telefonnummer, wodurch der Auslösemechanismus für die Ware aktiviert wird. Der Mobüfunkbetreiber bzw. Netzbetreiber übemimmt hierbei die Abrechnung und das Inkassorisiko für den Automatenbetreiber. Im Gegenzug dazu profitiert der Automatenbetreiber an einer verringerten Bargeldhaltung und an der Abwälzung des Inkassorisikos. Zusätzlich wird durch den verminderten Einsatz von Bargeld das Vandalismusrisiko bzw. der Aufwand eines Geldtransportes erheblich vermindert.

Zusammenfassend bedeutet aber die Verwendung des herkömmlichen Systems, dass der Mobilfunkteilnehmer bzw. Benutzer, der vor dem Warenautomaten steht, eine bestimmte Telefonnummer, welche vorzugsweise am Automaten angeschrieben ist, wählen muß, welche ggf. hinsichtlich der unterschiedlichen Waren verschieden ist.

Aus der JP-09212730 A ist eine Vorrichtung zur Ausgabe einer Ware bekannt, in dessen Nähe ein sogenannter Repeater angeordnet ist, mittels dessen von einer Mobilfunkeinheit übertragene Daten empfangbar sind, so dass feststellbar ist, ob sich der Nutzer der Mobilfunkeinheit in der Nähe der Vorrichtung befindet. Das in dieser Druckschrift offenbarte Verfahren sieht vor, eine Vorrichtung zur Ausgabe einer Ware sowie eine Mobilfunkeinheit bereitzustellen und im Anschluss an die Annäherung der Mobilfunkeinheit an die Vorrichtung das Auslösen einer Ware zu steuern.

Aufgabe der vorliegenden Erfindung ist es, eine Vorrichtung gemäß Anspruch 1 sowie ein Verfahren gemäß Anspruch 7 bzw. System gemäß Anspruch 11 so weiterzubilden, dass die Warenausgabe bzw. Dienstleistungsfreigabe für den Benutzer vereinfacht wird und dennoch ein gesichertes Abrechnungswesen bereitgestellt werden kann.

Gelöst wird diese Aufgabe mit den Merkmalen der Ansprüche 1, 7 und 11.

Anmeldungsgemäß wird eine Vorrichtung zur Ausgabe einer Ware und/oder Freigabe einer Dienstleistung bereit gestellt, die dadurch gekennzeichnet ist, dass sie eine Home-Base-Station aufweist, mittels derer von einer Mobilfunkeinheit übertragene Daten empfangbar sind und durch die eine GSM-Zelle eines Netzbetreibers gebildet wird, wobei die durch die Home-Base-Station gebildete GSM-Zelle autark arbeitet und somit mit keiner Funkzelle kommuniziert. Mit dieser Maßnahme wird der Vorteil erreicht, dass die heutzutage immer weiter verbreiteten Mobilfunkeinheiten dazu herangezogen werden können, zu einer weiteren Verwendungsmöglichkeit zu gelangen. Dadurch, dass beispielsweise die anmeldungsgemäße Vorrichtung mit einer GSM-Zelle eines Netzbetreibers ausgestattet ist, wird die anmeldungsgemäße Vorrichtung in die Lage versetzt, eine Mobilfunkeinheit zu erkennen und somit die in der Mobilfunkeinheit gespeicherten Daten für eine Abrechnung zu verwenden. Der Benutzer muß somit lediglich die Mobilfunkeinheit in die Nähe der Vorrichtung bringen, um beispielsweise in den Genuß einer Ware bzw. Dienstleistung zu kommen. Auf diese Weise wird dem Nutzer beispielsweise ein aufwendiger herkömmlicher Wählvorgang erspart und der Benutzer muß außer dem Drükken der Warenauswahltaste und des Nahebringens einer Mobilfunkeinheit keine weiteren Aktionen durchführen.

Erfindungsgemäß arbeitet die GSM-Zelle autark, d. h. es ist nicht notwendig, einen ständigen Kontakt zu einer Funkzelle zu haben. So ist es möglich, die Vorrichtung unabhängig vom Standort zu betreiben.

Weitere vorteilhafte Ausgestaltungen des vorliegenden Gegenstandes sind Gegenstand der Unteransprüche.

Wird die GSM-Zelle gemäß Anspruch 2 parallel zum Münzeinwurf geschaltet, so ist auf diese Weise eine einfache Nachrüstung bestehender Vorrichtungen möglich.

Wird gemäß Anspruch 3 die GSM-Zelle über ein Telemetrie-GSM-Terminal mit dem Netzbetreiber verbunden, so wird auf diese Weise ein kabelloses Übertragen in der für die Abrechnung notwendigen Benutzerdaten ermöglicht.

Weist gemäß Anspruch 4 die Vorrichtung eine Öffnung auf, welche vorzugsweise einen Annäherungsschalter aufweist, so wird mit dieser Maßnahme erreicht, dass nur diejenigen Benutzer einer Ware erhalten, die Ihre Mobilfunkeinheit bewußt in einen dafür vorgesehenen Bereich einbringen, d. h. beispielsweise eine Öffnung in der Vorrichtung, und ein dafür vorgesehener Annäherungsschalter diesen Vorgang detektiert und somit eventuell die GSM-Zelle oder auch den gesamten Warenautomaten vorzugsweise aus einem Standby-Zustand aktiviert.

Wird zusätzlich gemäß Anspruch 5 eine Auslesevorrichtung vorgesehen, die bestimmte Parameter beispielsweise die Identität des Benutzers und die Zeit der Benutzung ausliest, so wird auf diese Weise die Übertragungsrate bzw. die Übertragungsmenge optimiert.

Gemäß Anspruch 7 wird das Auslösen der Ware bzw. das Freigeben der Dienstleistung nur dann vorgenommen, wenn das zuletzt bereitgestellte Handover nicht ausgeführt wird. So sind die Anpassungsprobleme hinsichtlich der anmeldungsgemäßen Vorrichtung minimiert, da gängige GSM-Zellen herangezogen werden können, um anmeldungsgemäß zu arbeiten.

Weitere vorteilhafte Ausgestaltungen der vorliegenden Erfindung sind Gegenstand der übrigen Unteransprüche.

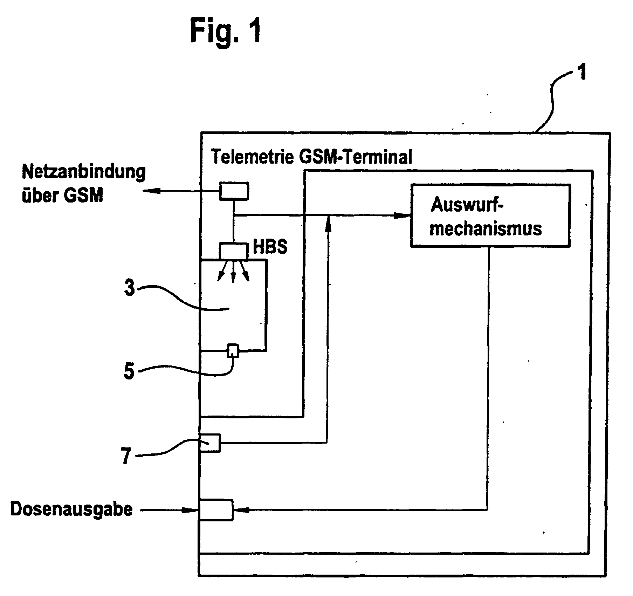

Anhand der Figur 1 soll eine bevorzugte Ausgestaltung der vorliegenden Erfindung dargestellt werden.

In Fig. 1 ist der mechanische Aufbau einer Vorrichtung 1 zur Ausgabe einer Ware, ein sogenannter Warenautomat dargestellt. In dieser bevorzugten Ausführungsform ist eine Öffnung 3 vorgesehen, in die eine Mobilfunkeinheit, beispielsweise ein Telefon eingebracht werden kann. Das Einbringen des Telefons wird mit einem Annäherungsschalter 5 detektiert, welcher beispielsweise ein Signal ausgibt, welches die als sogenannte Home-Base-Station "HBS" ausgestaltete GSM-Zelle aktiviert bzw. den gesamten Warenautomat aus einem Standby-Zustand holt. Nachdem beispielsweise der Annäherungsschalter das Einbringen der Mobilfunkeinheit detektiert, beginnt die Mobilfunkeinheit mit der HBS zu kommunizieren, wobei ein Datenaustausch des auf der Mobilfunkeinheit vorhandenen Daten mit der HBS vorgenommen wird. Bevor jedoch das sogenannte "Handover" erfolgt, welches beispielsweise im Normalbetrieb die Mobilfunkeinheit von einer Funkzelle zur nächsten Funkzelle für den Benutzer unbemerkt weiterreicht, wird der Auswurfmechanismus des Warenautomats aktiviert. Würde das Handover erfolgen, so würde beispielsweise die Mobilfunkeinheit sich vom Netz trennen, da das HBS autark arbeitet, d. h. mit keiner Funkzelle kommuniziert.

Wie in Fig. 1 ferner dargestellt ist, ist beispielsweise die Aktivierung des Auswurfmechanismus parallel mit einem Münzeinwurf 7 geschaltet, so dass herkömmliche Vorrichtungen auf einfache Weise nachgerüstet werden können, andererseits herkömmliche Warenautomaten auf herkömmliche Weise über Münzeinwurf arbeiten können.

Zur vereinfachten Abrechnung bzw. unmittelbaren Abrechnung ist ein Telemetrie-GSM-Terminal vorgesehen, welches über das GSM mit dem Netzvertreiber verbunden ist. Auf diese Weise können die rechnungsrelevanten Daten übertragen werden und dem Benutzer im Rahmen seiner normalen Mobilfunkabrechnung bzw. Telefonabrechnung in Rechnung gestellt werden.

Zum besseren Verständnis soll nachfolgend der Ablauf für die Ausgabe der Ware mittels oben beschriebener Vorrichtung dargestellt werden, wobei der beschriebene Ablauf unabhängig vom Standort ist, da zum Betreiben der Vorrichtung lediglich eine Anbindung des Netzbetreibers über GSM erforderlich ist und somit nur Strom und eine GSM-Abdeckung vorhanden sein muss. Um eine Ware aus dem Warenautomaten zu erhalten, drückt beispielsweise der Benutzer zunächst auf einen Knopf für die auszuwählende Ware. Wahlweise kann dieses auch nach dem Einführen des Terminals erfolgen. Danach hält der Benutzer die Mobilfunkeinheit in die Öffnung. Der Annäherungsschalter schaltet die HBS ein, wobei diese Funktionalität allerdings optional ist. Sie dient jedoch sowohl zum Strom sparen als auch für bessere funktechnische Verhältnisse außerhalb des Automaten. Die Mobilfunkeinheit entdeckt die neu GSM-Zelle und versucht sich einzubuchen, d. h. es wird ein Handover wie zwischen normalen Funkzellen üblich versucht. Da die als HBS ausgestattete GSM-Zelle aber nicht mit dem eigentlichen GSM-Netz verbunden ist, kann kein Handover zustande kommen. Die Mobilfunkeinheit bleibt weiterhin im Netz eingebucht und eingehende Übertragungen zur Mobilfunkeinheit bzw. Anrufe können erfolgen. Während des Einbuchungsvorganges erhält die HBS Informationen über die Identität der Mobilfunkeinheit und somit über den Benutzer. Mit dieser Identifizierung ist es beispielsweise auch möglich, dass die HBS steuert, ob nur netzeigene oder fremde Mobüfunkeinheiten mit entsprechenden SIM-Modulen akzeptiert werden.

Zur Übertragung dieser Informationen muß die HBS lediglich so modifiziert werden, dass nachdem es von einer solchen Mobilfunkeinheit angesprochen wurde, diese Information an das Telemetrie-Terminal übertragen werden.

Sollen beispielsweise unterschiedliche Preise für unterschiedliche Waren möglich sein, so könnte eine Kopplung mit einer an dem Warenautomaten vorgesehenen Tastatur erfolgen. Nach Übertragung der Informationen beispielsweise über das Telemetrie-Terminal erfolgt eine Signalabgabe an den Automaten, der ein Auswerfen der Ware ermöglicht.

Es hat sich als vorteilhaft herausgestellt, wenn das Telemetrie-Terminal die Informationen hemimmt und als Short-Message (SMS) an das GSM-Netz sendet, da die Übertragung der SMS Fehlersicherungsprotokolle beinhaltet, d. h. Schutz gegenüber Übertragungsfehler und die übliche GSM-Datensicherung zur Verfügung stellt. Schließlich werden die Informationen netzseitig von einem zentralen Server entgegengenommen, der das Format der Daten so abändern kann, dass es dem Format von Roaming-Partnem entspricht.

Nachfolgend sollen funktechnische Überlegungen berücksichtigt werden. Die im Inneren des Warenautomaten angebrachte HBS, die an sich mit sehr geringen Leistungen arbeitet, wird durch die möglichst geringe Einführungs-Öffnung nach außen hin abgeschottet. Zudem sorgt der Arm des Kunden bzw. Benutzers, der die Öffnung verdeckt, wenn das Terminal eingeführt ist, für eine zusätzliche Dämpfung bzw. Abschirmung.

Eine zusätzliche funktechnische Dämpfung bzw. Abschirmung kann ebenfalls erzielt werden, wenn ein engmaschiger Kettenvorhang die Einführungsöffnung verdeckt.

Ferner wird über den Annäherungsschalter erreicht, dass die HBS nur aktiv ist, wenn ein Kunde ein Terminal einführt, um so ein Abstrahlen ohne eingeführtes Terminal nach außen zu vermeiden und ungewolltes Auslösen verhindert wird, was eine in Rechnungstellung zur Folge hätte. Während dieser Zeit ist jedoch das Terminal stets betriebsbereit, so dass es immer in der eigentlichen GSM-Funkzelle eingebucht bleibt.

An dieser Stelle sei angemerkt, dass neben der Ausgabe von Waren auch die Freigabe einer Dienstleistung möglich ist, d. h. im Gastronomiebereich kann die Abrechnung dadurch erfolgen, dass der Gastronom eine anmeldungsgemäße Vorrichtung hernimmt und der Benutzer lediglich eine Mobilfunkeinheit auf eine mobile Vorrichtung auflegt und somit die Abrechnung der Dienstleistung in Gang setzen kann.

## Patentansprüche

1. Vorrichtung zur Ausgabe einer Ware und/oder Freigabe einer Dienstleistung,
**dadurch gekennzeichnet,**
**daß** die Vorrichtung eine Home-Base-Station (HBS) aufweist, mittels derer von einer Mobilfunkeinheit übertragene Daten empfangbar sind und durch die eine GSM-Zelle eines Netzbetreibers gebildet wird,
und **daß** die durch die Home-Base-Station (HBS) gebildete GSM-Zelle autark arbeitet und somit mit keiner Funkzelle kommuniziert.

2. Vorrichtung nach Anspruch 1, **dadurch gekennzeichnet, daß** die GSM-Zelle parallel zum Münzeinwurf (7) geschaltet wird.

3. Vorrichtung nach Anspruch 1 oder 2, **dadurch gekennzeichnet, daß** die GSM-Zelle über ein Telemetrie-GSM-Terminal mit dem Netzbetreiber verbunden ist.

4. Vorrichtung nach einem der vorhergehenden Ansprüche, **dadurch gekennzeichnet, daß** eine Öffnung (3) vorgesehen ist, welche einen Annäherungsschalter (5) aufweist.

5. Vorrichtung nach einem der vorhergehenden Ansprüche, **dadurch gekennzeichnet, daß** eine Auslesevorrichtung vorgesehen ist, die die Identität des Benutzers und die Zeit der Benutzung ausliest.

6. Vorrichtung nach einem der vorhergehenden Ansprüche, **dadurch gekennzeichnet, daß** die GSM-Zelle eine geringe Reichweite aufweist.

7. Verfahren zur Ausgabe einer Ware und/oder Freigabe einer Dienstleistung, vorzugsweise unter Verwendung einer Vorrichtung nach einem der Ansprüche 1 bis 6, welches aufweist:
a) Bereitstellen einer Vorrichtung, die eine Ware zur Ausgabe und eine Home-Base-Station (HBS) enthält, mittels derer von einer Mobilfunkeinheit übertragene Daten empfangbar sind und durch die eine GSM-Zelle eines Netzbetreibers gebildet wird, wobei die durch die Home-Base-Station (HBS) gebildete GSM-Zelle autark arbeitet und somit mit keiner Funkzelle kommuniziert,
b) Bereitstellen einer Mobilfunkeinheit,
c) Annähern der Mobilfunkeinheit an die Vorrichtung,
d) Auslösen der Ware und/oder Freigabe der Dienstleistung, nachdem die GSM-Zelle die Mobilfunkeinheit erkannt hat, wobei das Auslösen der Ware und/oder die Freigabe der Dienstleistung nur dann vorgenommen wird, wenn das zuletzt bereitgestellte Handover nicht ausgeführt wird.

8. Verfahren nach Anspruch 7, **dadurch gekennzeichnet, daß** das Erkennen der Mobilfunkeinheit durch Auslesen der Benutzeridentität und der Benutzungszeit erfolgt.

9. Verfahren nach Anspruch 7 oder 8, **dadurch gekennzeichnet, daß** das Auslösen der Ware durch Hineinhalten der Mobilfunkeinheit in eine Öffnung (3) der Vorrichtung erfolgt.

10. Verfahren nach einem der Ansprüche 7 bis 9, **dadurch gekennzeichnet, daß** als Mobilfunkeinheit ein Handtelefon verwendet wird.

11. System zur Ausgabe einer Ware, vorzugsweise unter der Verwendung der Vorrichtung nach einem der Ansprüche 1 bis 6 und/oder dem Verfahren nach einem der Ansprüche 7 bis 10, **gekennzeichnet durch** eine Mobilfunkeinheit und eine in einer Warenausgabeeinheit vorgesehene GSM-Zelle, wobei das System ferner einer Home-Base-Station (HBS) aufweist, **durch** die die GSM-Zelle gebildet wird und mittels derer von einer Mobilfunkeinheit übertragene Daten empfangbar sind, und wobei die **durch** die Home-Base-Station (HBS) gebildete Zelle autark arbeitet und somit mit keiner Funkzelle kommuniziert.

## Claims

1. Apparatus for issuing an item and/or allowing a service,
**characterized**
**in that** the apparatus has a home base station (HBS), by means of which data which is transmitted from a mobile radio unit can be received and by means of which a GSM cell of a network operator is formed,
and **in that** the GSM cell which is formed by the home base station (HBS) operates autonomously and thus does not communicate with any radio cell.

2. Apparatus according to Claim 1, **characterized in that** the GSM cell is connected in parallel with the coin slot (7).

3. Apparatus according to Claim 1 or 2, **characterized in that** the GSM cell is connected to the network operator via a telemetry GSM terminal.

4. Apparatus according to one of the preceding claims, **characterized in that** an opening (3) which has a proximity switch (5) is provided.

5. Apparatus according to one of the preceding claims, **characterized in that** a read apparatus is provided, which reads the identity of the user and the time of use.

6. Apparatus according to one of the preceding claims, **characterized in that** the GSM cell has a short range.

7. Method for issuing an item and/or allowing a service, preferably using an apparatus according to one of Claims 1 to 6, which has:
a) provision of an apparatus which contains an item for issue and a home base station (HBS), by means of which data which is transmitted from a mobile radio unit can be received and by means of which a GSM cell of a network operator is formed, with the GSM cell which is formed by the home base station (HBS) operating autonomously, and thus not communicating with any radio cell,
b) provision of a mobile radio unit,
c) approach of the mobile radio unit to the apparatus,
d) issue of the item and/or allowance of the service once the GSM cell has identified the mobile radio unit, with the issue of the item and/or the allowance of the service being carried out only when the most recently provided handover has not been carried out.

8. Method according to Claim 7, **characterized in that** the mobile radio unit is identified by reading the user identity and the usage time.

9. Method according to Claim 7 or 8, **characterized in that** the item is issued by holding the mobile radio unit in an opening (3) in the apparatus.

10. Method according to one of Claims 7 to 9, **characterized in that** a mobile telephone is used as the mobile radio unit.

11. System for issuing an item, preferably using the apparatus according to one of Claims 1 to 6 and/or the method according to one of Claims 7 to 10, **characterized by** a mobile radio unit and a GSM cell which is provided in an item issuing unit, with the system furthermore having a home base station (HBS) by means of which the GSM cell is formed, and by means of which data which is transmitted from a mobile radio unit can be received, and with the cell which is formed by the home base station (HBS) operating autonomously, and thus not communicating with any radio cell.

## Revendications

1. Dispositif permettant de fournir un produit et/ou de lancer un service,
**caractérisé en ce que**
le dispositif comprend une station de base locale (ou HBS pour « home-base station ») qui permet de recevoir des données transmises par une unité radio mobile et qui constitue une cellule GMS d'un exploitant de réseau
et que la cellule GSM constituée par la station de base locale (HBS) fonctionne en autarcie et ne communique donc pas avec une cellule radio.

2. Dispositif selon la revendication 1, **caractérisé en ce que** la cellule GSM est commutée parallèlement au jet de pièces de monnaie à l'intérieur (7).

3. Dispositif selon la revendication 1 ou 2, **caractérisé en ce que** la cellule GSM est reliée par un terminal GSM à télémétrie à l'exploitant du réseau.

4. Dispositif selon l'une quelconque des revendications précédentes, **caractérisé en ce qu'**il est prévu une ouverture (3) qui est équipée d'un détecteur de proximité (5).

5. Dispositif selon l'une quelconque des revendications précédentes, **caractérisé en ce qu'**il est prévu un dispositif de lecture qui lit l'identité de l'utilisateur et l'heure d'utilisation.

6. Dispositif selon l'une quelconque des revendications précédentes, **caractérisé en ce que** la cellule GSM possède une faible amplitude de portée.

7. Procédé de fourniture d'un produit et/ou de lancement d'un service de préférence en utilisant un dispositif selon l'une quelconque des revendications 1 à 6, qui comprend :
a) la mise à disposition d'un dispositif qui contient un produit à fournir et une station de base locale (HBS) qui permet de recevoir des données transmises par une unité radio mobile et qui est constituée par la cellule GSM d'un exploitant de réseau, dans lequel la cellule GSM constituée par la station de base locale (HBS) fonctionne en autarcie et ne communique donc pas avec une cellule radio,
b) la mise à disposition d'une unité radio mobile,
c) l'approche de l'unité radio mobile vers le dispositif,
d) la sortie du produit et/ou le lancement du service une fois que la cellule GSM a détecté l'unité radio mobile, la sortie du produit et/ou le lancement du service n'ayant lieu que si le dernier transfert mis à disposition n'est pas effectué.

8. Procédé selon la revendication 7, **caractérisé en ce que** la détection de l'unité radio mobile se fait par lecture de l'identité de l'utilisateur et de l'heure d'utilisation.

9. Procédé selon la revendication 7 ou 8, **caractérisé en ce que** la sortie du produit est déclenchée en tenant l'unité radio mobile dans une ouverture (3) du dispositif.

10. Procédé selon l'une quelconque des revendications 7 à 9, **caractérisé en ce qu'**on utilise comme unité radio mobile un téléphone portable.

11. Système de fourniture d'un produit, de préférence en utilisant le dispositif selon l'une quelconque des revendications 1 à 6 et/ou le procédé selon l'une quelconque des revendications 7 à 10, **caractérisé par** une unité radio mobile et une cellule GSM prévue dans une unité de fourniture de produit, le système comportant en outre une station de base locale (HBS) qui constitue la cellule GSM, et qui permet de recevoir des données transmises par une unité radio mobile, et dans lequel la cellule constituée par la station de base locale (HBS) fonctionne en autarcie et ne communique donc pas avec une cellule radio.
